# EUROPEAN PATENT APPLICATION

(11) **EP 4 693 666 A1**
(43) Date of publication of application: **11.02.2026**
(21) Application number: 24780175.6
(22) Date of filing: 25.03.2024
(51) Int. Cl.: H01M 50/291, H01M 50/213, H01M 50/242, H01M 50/293

(54) **ELECTRIC POWER STORAGE MODULE**

(30) Priority: 31.03.2023 JP 2023057771
(71) Applicant: Panasonic Intellectual Property Management Co., Ltd., Kadoma-shi, Osaka 571-0057 (JP)
(72) Inventor: SAWADA, Koichi, Osaka 571-0057 (JP); GOTOU, Toshiya, Osaka 571-0057 (JP); MURATSU, Jiro, Osaka 571-0057 (JP)
(74) Representative: Eisenführ Speiser
(86) International application number: PCT/JP2024/011695
(87) International publication number: WO 2024/204057

(57) **Abstract**

Electric power storage module (10) includes a plurality of electric power storages (20) and holder (40) that accommodates the plurality of electric power storages (20), in which holder (40) includes a plurality of containers (41) and a plurality of ribs (45),each of the plurality of electric power storages (20) is accommodated in a corresponding one of the plurality of containers (41), and the plurality of ribs (40) are provided on a plurality of inner peripheral faces of the plurality of containers (41) to hold a plurality of side peripheral faces of the plurality of electric power storages (20).

## Description

### TECHNICAL FIELD

The present disclosure relates to an electric power storage module.

### BACKGROUND ART

An electric power storage module is used as a power source including a plurality of electric power storages. The electric power storage module may be installed in a vehicle. In the in-vehicle electric power storage module, for example, when an impact load is applied at the time of side collision of the vehicle, the load is applied to the electric power storage to deform the electric power storage, which may make the electric power storage unsafe. For example, PTL 1 discloses a technique for preventing a load from being applied to an electric power storage by breaking a holder due to a recessed shape provided in the holder at the time of a side collision of a vehicle.

### Citation List

### Patent Literature

PTL 1: Unexamined Japanese Patent Publication No. 2015-156320

### SUMMARY OF THE INVENTION

Not only an in-vehicle electric power storage module, an electric power storage module has room for further improvement in safety.

An electric power storage module according to the present disclosure includes a plurality of electric power storages and the holder that accommodates the plurality of electric power storages, in which the holder includes a plurality of containers and a plurality of ribs, each of the plurality of electric power storages is accommodated in a corresponding one of the plurality of containers, and the plurality of ribs are provided on a plurality of inner peripheral faces of the plurality of containers to hold a plurality of side peripheral faces of the plurality of electric power storages.

According to the electric power storage module of the present disclosure, safety of the electric power storage module can be improved.

### BRIEF DESCRIPTION OF THE DRAWINGS

Fig. 1 is a perspective view showing an electric power storage module which is an example of an exemplary embodiment.
Fig. 2 is an axial cross-sectional view showing an electric power storage.
Fig. 3 is a plan view showing an electric power storage module which is an example of an exemplary embodiment.
Fig. 4 is an axial cross-sectional view showing an electric power storage module which is an example of an exemplary embodiment.
Fig. 5 is a diagram for explaining a case where an impact load is applied to the electric power storage module.
Fig. 6 is a plan view showing the lower holder according to an example of the exemplary embodiment.
Fig. 7 is a bottom view showing the lower holder according to an example of the exemplary embodiment.

### DESCRIPTION OF EMBODIMENT

Hereinafter, exemplary embodiments of the present disclosure will be described in detail. In the following description, specific shapes, materials, directions, numerical values, etc. are examples illustrated to facilitate understanding of the present disclosure and may be changed as appropriate to suit uses, purposes, specifications, or other requirements.

### [Electric Power Storage Module]

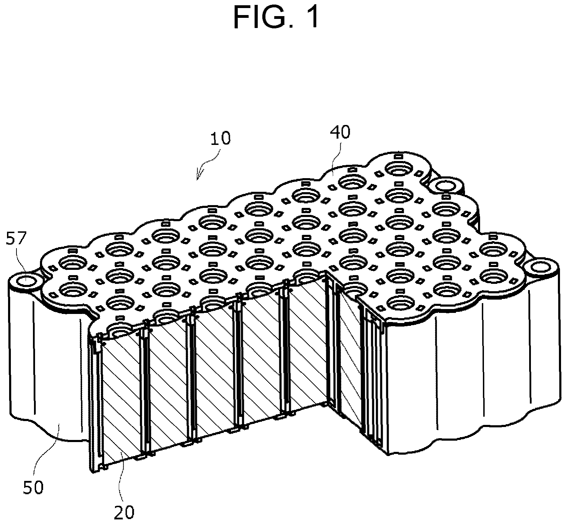

Electric power storage module 10, which is an example of an exemplary embodiment, will be described with reference to Fig. 1.

Electric power storage module 10 is installed in an electric vehicle as a power source of a motor that drives the electric vehicle. However, the electric power storage module of the present disclosure is not limited to installation in an electric vehicle and, for example, may be used as a power source of an electric device driven by a motor such as an electric power tool, an electric power-assisted bicycle, an electric motorcycle, an electric wheelchair, an electric tricycle, or an electric cart. The application of the electric power storage module of the present disclosure is not limited, and electric power storage module may be used as a power source of various electric devices used indoors and outdoors, such as a cleaner, a wireless device, a lighting device, a digital camera, and a video camera.

The electric power storage module of the present disclosure may be provided in an electric power storage pack. The electric power storage pack is a power source provided in a vehicle body of an electric vehicle and in which a plurality of electric power storage modules is disposed in a housing. The electric power storage module of the present disclosure may also be provided in a vehicle body of a vehicle.

Electric power storage module 10 includes a plurality of electric power storages 20, an upper holder 40 which holds upper portions of the plurality of electric power storages 20 in the axial direction, and lower holder 50 which holds a central portion and a lower portion of electric power storage 20 in the axial direction. Hereinafter, each member of electric power storage module 10 may be described using an axial direction or a radial direction of cylindrical electric power storage 20 described later. Electric power storage module 10 is fixed to the vehicle body or the energy storage pack by bolts or the like penetrating through fixing holes 57 formed in lower holder 50.

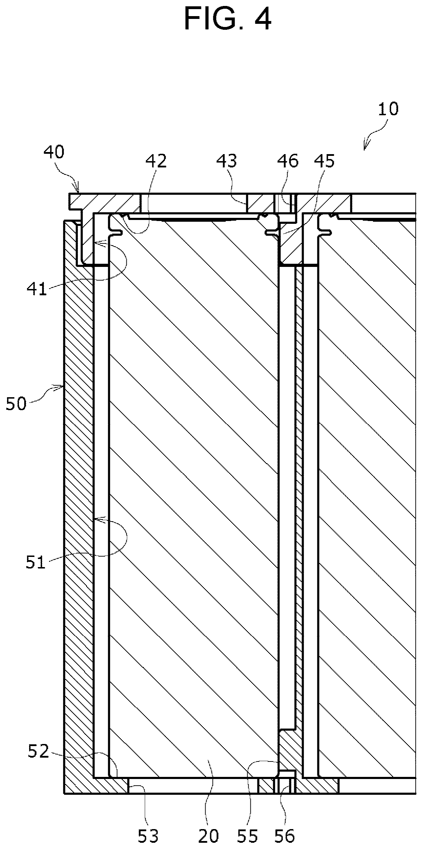

Although details will be described later, upper holder 40 includes a container 41 that accommodates electric power storage 20, and a plurality of ribs 45 that are formed in container 41 and hold side peripheral faces of electric power storage 20 (see Fig. 4). Lower holder 50 includes container 51 which accommodates electric power storage 20 and a plurality of ribs 55 which are formed in container 51 and hold side peripheral faces of electric power storage 20 (see Fig. 4). According to upper holder 40 and lower holder 50, safety of electric power storage module 10 can be improved.

### [Electric Power Storage]

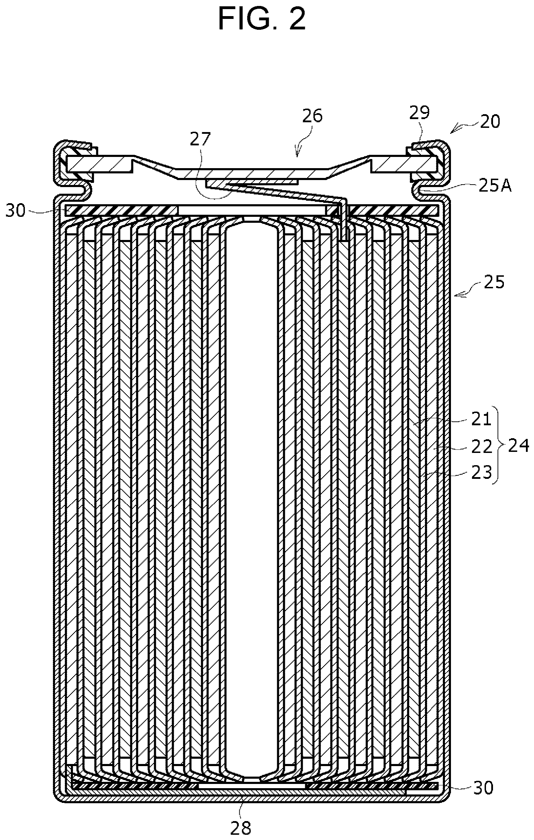

Electric power storage 20, which is an example of an exemplary embodiment, will be described in detail with reference to Figs. 1 and 2.

As shown in Fig. 1, a plurality of electric power storages 20 are densely filled in electric power storage module 10 in consideration of safety, and adjacent electric power storages 20 are arranged substantially close to each other. Alternatively, four electric power storages 20 may be arranged in four directions with respect to one electric power storage 20. In electric power storage 20, for example, in plan view, six electric power storages 20 are arranged so as to surround single electric power storage 20 (or in a staggered arrangement).

As shown in Fig. 2, in this example, a cylindrical lithium ion secondary battery is used as electric power storage 20, but electric power storage 20 may be a nickel-metal hydride battery, a capacitor or the like. Electric power storage 20 includes, for example, electrode group 24 in which strip-shaped positive electrode 21 and strip-shaped negative electrode 22 are wound in with strip-shaped separator 23 interposed therebetween, cylindrical exterior can 25 containing electrode group 24 together with an electrolyte solution, sealing body 26 sealing an opening of exterior can 25 in an insulated state, foil-shaped positive electrode lead 27 electrically connecting a positive electrode 21 and sealing body 26, and negative electrode lead 28 electrically connecting negative electrode 22 and exterior can 25. Insulating gasket 29 may be disposed between an outer periphery of sealing body 26 and an inner peripheral face of the opening of exterior can 25.

Exterior can 25 is provided in its outer peripheral face close to the opening part with groove 25A in an annular shape. Groove 25A is formed as an annular protrusion on the inner peripheral face of exterior can 25. Gasket 29 and sealing body 26 are disposed on protrusion in an annular shape in exterior can 25. Then, an opening end of exterior can 25 is swaged to fall down inward of exterior can 25 while gasket 29 is disposed on an inner peripheral side. Sealing body 26 is sandwiched by the swaged opening end and the protrusion in the axial direction through gasket 29 and thus the opening of exterior can 25 is sealed.

Sealing body 26 is provided with a current interruption mechanism (CID) or an exhaust valve that ruptures when the inside of exterior can 25 reaches predetermined pressure or more. In addition, insulating plate 30 for insulating electrode group 24 from exterior can 25 may be provided between electrode group 24 and the bottom of exterior can 25 or between electrode group 24 and the protrusion (groove 25A). When insulating plate 30 is provided, positive electrode lead 27 may extend through a through-hole formed in insulating plate 30. Negative electrode lead 28 may pass through a through-hole formed in insulating plate 30 or may extend while bypassing insulating plate 30. In electric power storage 20, as described above, the positive electrode terminal may be formed on the top surface of sealing body 26, and the negative electrode terminal may be formed on the swaged shoulder portion of exterior can 25.

### [Upper Holder]

Upper holder 40 as an example of the exemplary embodiment will be described with reference to Figs. 1 and 3 to 5.

As shown in Figs. 1, 3, and 4, upper holder 40 holds the upper portions of the plurality of electric power storages 20 in the axial direction as described above. Upper holder 40 includes a container 41 which accommodates electric power storage 20 and a plurality of ribs 45 which are formed in container 41 and hold side peripheral faces of electric power storage 20.

Upper holder 40 is made of thermoplastic resin. The thermoplastic resin is roughly classified into general-purpose plastics and engineering plastics, and polyethylene, polypropylene, polyamide, ABS, or the like is used as the thermoplastic resin.

Container 41 is formed in a circular shape when viewed in the axial direction. Container 41 is formed such that six containers 41 surround one container 41 in plan view, for example. Container 41 includes top face 42 facing an upper end face (top surface) of electric power storage 20 and opening 43 formed in top face 42 and exposing the top surface of electric power storage 20. Container 41 accommodates electric power storage 20 with a predetermined gap from the side peripheral face of electric power storage 20.

Rib 45 holds the side peripheral face of electric power storage 20 as described above. With such a configuration, electric power storage 20 is held by ribs 45, and is accommodated in container 41 with a predetermined gap formed between the side peripheral face of electric power storage 20 and container 41. That is, a gap is provided between the side peripheral face of electric power storage 20 and the inner peripheral face of container 41. In addition, a crushable zone including rib 45 and a predetermined gap is formed, and when an impact load is applied to electric power storage module 10, rib 45 is deformed (for example, plastically deformed) or broken at a stress lower than a stress that causes electric power storage 20 to start deformation, so that rib 45 is broken at the time of collision to absorb the impact load, and electric power storage 20 can be protected from the impact. As a result, electric power storage 20 is not brought into an unsafe state, and the safety of electric power storage module 10 can be improved.

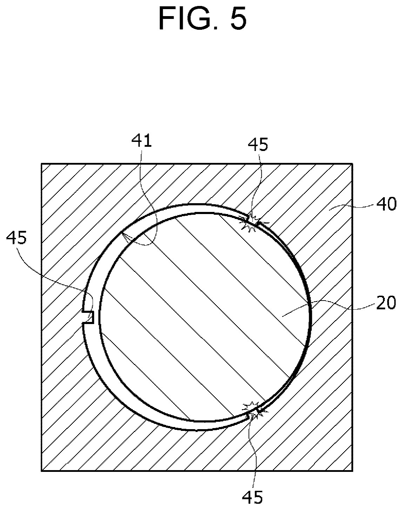

As shown in Fig. 5, when an impact load is applied to cylindrical electric power storage module 10, one rib 45 out of the plurality of ribs 45 is broken or plastically deformed so that there is no rib holding electric power storage 20, and electric power storage 20 can move or rotate container 41, and an impact load applied to electric power storage 20 can be counteracted. By breaking rib 45, a portion where electric power storage 20 can move or rotate in container 41 is enlarged, and an impact load applied to electric power storage 20 can be further accommodated. As a result, it is possible to reduce an impact load applied to electric power storage 20, to suppress unsafety of electric power storage 20, and to improve safety of electric power storage module 10. At this time, at least three ribs 45 may be provided for one container 41, and it is particularly preferable that three ribs 45 are provided. This is because it is difficult to bind electric power storage 20 with remaining two ribs 45 due to deformation or destruction of one rib 45 among three ribs 45.

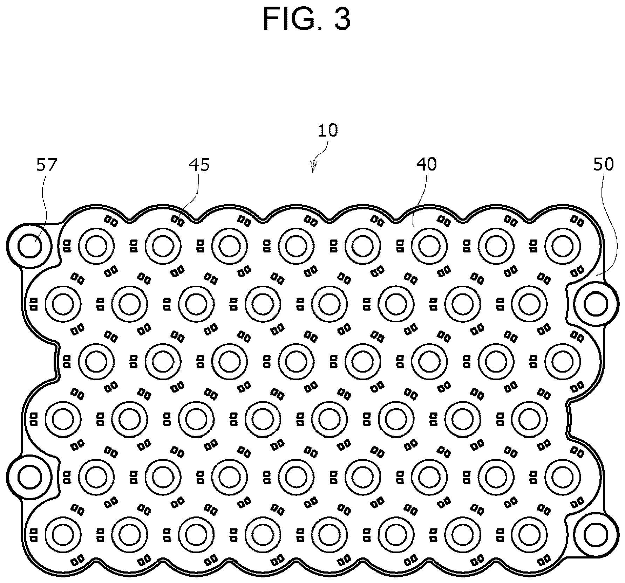

Hereinafter, a case where an impact load is applied from one side (the left side of the sheet of Fig. 3) in the longitudinal direction of electric power storage module 10 will be described.

As shown in Figs. 1, 3, and 4 again, three ribs 45 are formed every 120° in a plane perpendicular to the axial direction. One rib 45 of three ribs 45 is formed on one side in the longitudinal direction, and two ribs 45, 45 of three ribs 45 are formed at positions of 120° and 240° when the other side in the longitudinal direction is set to 0°. As a result, ribs 45, 45 formed on the other side in the longitudinal direction are more likely to be broken before electric power storage 20 is deformed by the impact load.

Rib 45 is formed so as to protrude radially inward from container 41. The radial length of rib 45 is equal to the size of the gap between the side peripheral face of electric power storage 20 and container 41.

The axial length (height) of rib 45 is formed to be slightly shorter than the axial length of container 41. The length of rib 45 in the axial direction is not limited to the above. Rib 45 is formed from the lower end of container 41 to a position separated from top face 42 by a slight gap. Rib 45 is formed below hole 46 formed in top face 42. Hole 46 is a space necessary for molding rib 45 in upper holder 40 when upper holder 40 is molded by a mold.

The number, size, and arrangement of the ribs of the present disclosure are not limited to the number, size, and arrangement of ribs 45 of the present exemplary embodiment, and may be any number, size, and arrangement of ribs that are broken to form a crushable zone when an assumed impact load is applied, based on the magnitude and direction of an assumed impact load applied to upper holder 40 and the strength of the ribs.

### [Lower Holder]

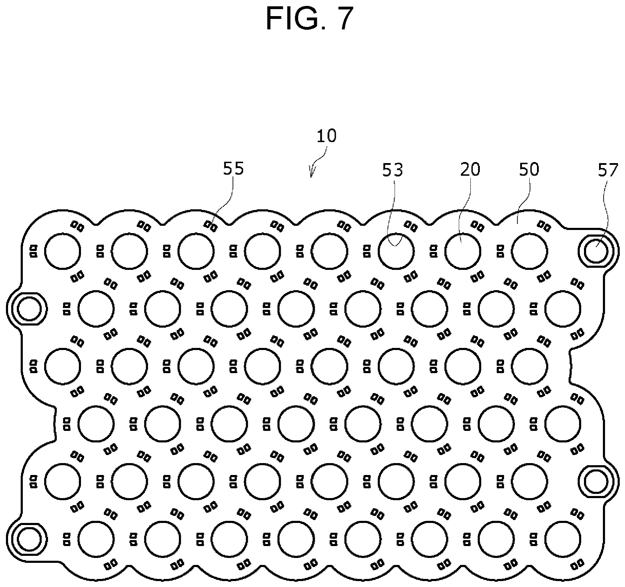

Lower holder 50 as an example of the exemplary embodiment will be described with reference to Figs. 1, 4, 6, and 7.

As described above, lower holder 50 holds the central portion and the lower portion of the plurality of electric power storages 20 in the axial direction. Lower holder 50 includes container 51 which accommodates electric power storage 20, a plurality of ribs 55 which are formed in container 51 and hold side peripheral faces of electric power storage 20, and fixing holes 57 for fixing lower holder 50. Lower holder 50 is made of the same material as upper holder 40.

Container 51 is formed in a circular shape when viewed from the axial direction. For example, container 51 is formed such that six containers 51 surround one container 51 in plan view. Container 51 includes bottom surface portion 52 which opposedly faces a lower end face (bottom surface) of electric power storage 20, and opening 53 which is formed on bottom surface portion 52 and exposes the bottom surface of electric power storage 20. Container 51 accommodates electric power storage 20 with a predetermined gap from the side peripheral face of electric power storage 20.

Rib 55 holds the side peripheral face of electric power storage 20 as described above. With such a configuration, electric power storage 20 is held by ribs 55, and is accommodated in container 51 with a predetermined gap formed between the side peripheral face of electric power storage 20 and container 51. In addition, a crushable zone including rib 55 and the predetermined gap is formed, and when an impact load is applied to electric power storage module 10, rib 55 is broken to absorb the impact load, and electric power storage 20 can be protected from the impact. As a result, electric power storage 20 is not brought into an unsafe state, and the safety of electric power storage module 10 can be improved.

The action and effect that can counteract the impact load applied to electric power storage 20 when the impact load is applied to electric power storage module 10 are similar to those of upper holder 40 described above, and thus the description thereof is omitted.

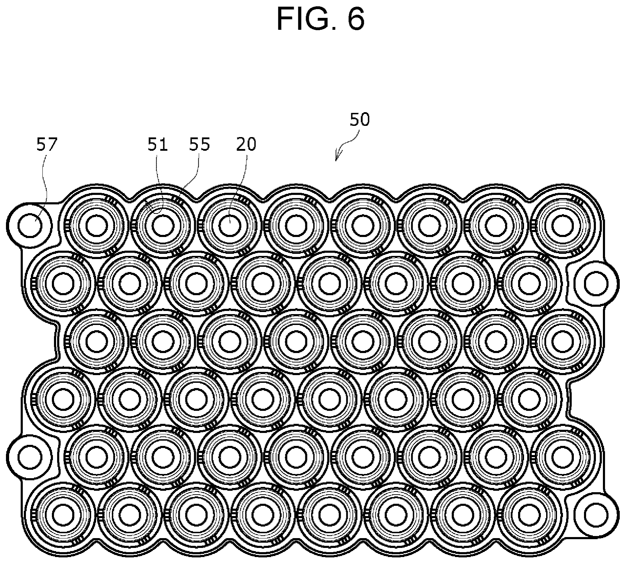

Hereinafter, a case where an impact load is applied from one side in the longitudinal direction of electric power storage module 10 (left side of the sheet of Fig. 6) will be described.

Three ribs 55 are formed at every 120° in the peripheral direction of the side peripheral face of electric power storage 20. One rib 55 of the three ribs 55 is formed on one side in the longitudinal direction, and two ribs 55 and 55 of the three ribs 55 are formed at positions of 120° and 240° when the other side in the longitudinal direction is set to 0°. As a result, two ribs 55, 55 formed on the other side in the longitudinal direction are deformed or destroyed before electric power storage 20 is deformed by the impact load.

The axial length (height) of rib 55 is set to the same height as rib 45 formed on upper holder 40. Rib 55 is formed at the lower end of lower holder 50. Rib 55 is formed above hole 56 formed in bottom surface portion 52. Hole 56 is a space necessary for molding rib 55 in lower holder 50 when lower holder 50 is molded by a mold.

The number, size, and arrangement of the ribs of the present disclosure are not limited to the number, size, and arrangement of ribs 55 of the present exemplary embodiment, and may be any number, size, and arrangement of ribs that are broken to form a crushable zone when an assumed impact load is applied, based on the magnitude and direction of an assumed impact load applied to lower holder 50 and the strength of the ribs.

The present disclosure is further described by the following exemplary embodiments.

Configuration 1: An electric power storage module including: a plurality of electric power storages; and a holder that holds the plurality of electric power storages, in which the holder includes a plurality of containers and a plurality of ribs, each of the plurality of electric power storages is accommodated in a corresponding one of the plurality of containers, and the plurality of ribs are provided on a plurality of inner peripheral faces of the plurality of containers to hold a plurality of side peripheral faces of the plurality of electric power storages.

Configuration 2: The electric power storage module according to Configuration 1, in which a first container is one of the plurality of containers, a first electric power storage is one of the plurality of electric power storages, a first inner peripheral face is one of the plurality of inner peripheral faces of the plurality of containers, a first side peripheral face is one of the plurality of side peripheral faces, the first inner peripheral face is an inner peripheral face of the first container, the first electric power storage is accommodated in the first container, the first side peripheral face is a side peripheral face of the first electric power storage, and a gap is provided between the first inner peripheral face of the first container and the first side peripheral face of the first electric power storage.

Configuration 3: The electric power storage module according to Configuration 2, in which the plurality of ribs include at least three ribs, and the at least three ribs are located on a plane perpendicular to an axial direction of the electric power storage.

Configuration 4: The electric power storage module according to Configuration 2, in which the plurality of ribs include three ribs, and the three ribs are provided in the first container.

Configuration 5: The electric power storage module according to Configuration 3, in which the at least three ribs are provided at equal intervals in a peripheral direction of the first side peripheral face of the first electric power storage.

Configuration 6: The electric power storage module according to any one of Configurations 1 to 5, in which a stress that causes one of the plurality of ribs to start deformation when a load is applied to the electric power storage module is lower than a stress that causes one of the plurality of electric power storages to start deformation.

Configuration 7: The electric power storage module according to any one of Configurations 1 to 6, in which each of the plurality of electric power storages has a cylindrical shape.

Configuration 8: The electric power storage module according to any one of Configurations 1 to 7, in which the plurality of ribs are provided at positions where one end portions of the electric power storage in the axial direction is held.

Note that the present disclosure is not limited to the above-described exemplary embodiment and modified examples thereof, and it is a matter of course that various changes and improvements can be made within the scope of the content described in the claims of the present application.

### REFERENCE MARKS IN THE DRAWINGS

- 10: electric power storage module
- 20: electric power storage
- 21: positive electrode
- 22: negative electrode
- 23: separator
- 24: electrode group
- 25: exterior can
- 25A: groove
- 26: sealing body
- 27: positive electrode lead
- 28: negative electrode lead
- 29: gasket
- 30: insulating plate
- 40: upper holder (holder)
- 41: container
- 42: top surface
- 43: opening
- 45: rib
- 46: hole
- 50: lower holder (holder)
- 51: container
- 52: bottom surface
- 53: opening
- 55: rib
- 56: hole
- 57: fixing hole

## Claims

1. An electric power storage module comprising:
a plurality of electric power storages; and
a holder that holds the plurality of electric power storages,
wherein
the holder includes a plurality of containers and a plurality of ribs,
each of the plurality of electric power storages is accommodated in a corresponding one of the plurality of containers, and
the plurality of ribs are provided on a plurality of inner peripheral faces of the plurality of containers to hold a plurality of side peripheral faces of the plurality of electric power storages.

2. The electric power storage module according to Claim 1, wherein
a first container is one of the plurality of containers,
a first electric power storage is one of the plurality of electric power storages,
a first inner peripheral face is one of the plurality of inner peripheral faces of the plurality of containers,
a first side peripheral face is one of the plurality of side peripheral faces,
the first inner peripheral face is an inner peripheral face of the first container,
the first electric power storage is accommodated in the first container,
the first side peripheral face is a side peripheral face of the first electric power storage, and
a gap is provided between the first inner peripheral face of the first container and the first side peripheral face of the first electric power storage.

3. The electric power storage module according to Claim 2, wherein
the plurality of ribs include at least three ribs, and
the at least three ribs are located on a plane perpendicular to an axial direction of the electric power storage.

4. The electric power storage module according to Claim 2, wherein
the plurality of ribs include three ribs, and
the three ribs are provided in the first container.

5. The electric power storage module according to Claim 3, wherein the at least three ribs are provided at equal intervals in a peripheral direction of the first side peripheral face of the first electric power storage.

6. The electric power storage module according to any one of Claims 1 to 5, wherein a stress that causes one of the plurality of ribs to start deformation when a load is applied to the electric power storage module is lower than a stress that causes one of the plurality of electric power storages to start deformation.

7. The electric power storage module according to any one of Claims 1 to 6, wherein each of the plurality of electric power storages has a cylindrical shape.

8. The electric power storage module according to any one of Claims 1 to 7, wherein the plurality of ribs are provided at positions where one end portions of the plurality of electric power storages in the axial direction are held.
